# EUROPÄISCHE PATENTSCHRIFT

(11) **EP 2 217 026 B1**
(45) Veröffentlichungstag und Bekanntmachung des Hinweises auf die Patenterteilung: **14.06.2017**
(21) Anmeldenummer: 10152952.7
(22) Anmeldetag: 08.02.2010
(51) Int. Cl.: H04W 48/18, H04L 29/06

(54) **Verfahren zur Herstellung einer Kommunikationsverbindung von einem elektronischen Endgerät zu einem Heimat-Kommunikationsnetz**
Method for setting up a communication connection between an electronic terminal and a home communication network
Procédé pour établir un lien de communication entre un terminal électronique et un réseau de communication natif

(30) Priorität: 09.02.2009 DE 102009008090
(43) Veröffentlichungstag der Anmeldung: 11.08.2010
(73) Patentinhaber: Vodafone GmbH, 40549 Düsseldorf (DE)
(72) Erfinder: Verstraeten, Heinz Dieter, 41466, Neuss (DE)
(74) Vertreter: Müller & Schubert

(56) Entgegenhaltungen:
- WO-A1-2007/015574
- DE-A1- 10 261 201
- DE-A1-102004 057 387
- US-A1- 2001 023 446
- US-A1- 2007 019 670
- US-A1- 2008 056 286

## Beschreibung

Die vorliegende Erfindung betrifft ein Verfahren zur Herstellung einer Kommunikationsverbindung von einem elektronischen Endgerät, insbesondere einem Computer, zu einem bestimmbaren Heimat-Kommunikationsnetz.

Eine Verbindung ins Internet ist heutzutage eine Selbstverständlichkeit. Hierbei existieren eine Vielzahl verschiedener Zugangsarten bzw. Übertragungsmedien, über die eine Verbindung von einem elektronischen Endgerät, insbesondere einem mobilen elektronischen Endgerät, beispielsweise einem Laptop, einem PDA oder einem Mobiltelefon, zum Internet realisiert werden kann. Hierbei ist insbesondere der Zugang zu einem Heimat-Kommunikationsnetz, das heißt einem Firmennetz, von besonderer Bedeutung. Laptop-Benutzer wechseln in der Regel im Laufe eines Tages das Zugangsnetz bzw. die Zugangsart ihn ihr spezifisches Heimat-Kommunikationsnetz mehrfach. Beispielsweise Ethernet am Büroarbeitsplatz, WLAN in einer Konferenzzone, UMTS unterwegs. Dies führt mehrfach zur notwendigen Konfigurationsänderungen und Aktionen durch den Nutzer.

Vorbekannte Lösungen auf diesem Gebiet sehen vor, dass für einen Computer die günstigste Netzwerkverbindung aufgespürt wird. Dabei werden als Zugangsart sowohl per Kabel mit dem elektronischen Endgerät, insbesondere dem Computer, verbundene LAN-Anschlüsse, wie auch alle an dem jeweiligen Standort empfangbaren kabellosen Verbindungen, wie beispielsweise WLAN-, Bluetooth-. IrDA-, oder GSM-, GPRS- und UMTS-Verbindungen, genutzt. Die verfügbaren Zugangsarten werden aufgelistet und "der Beste" unter den verfügbaren Netzwerkzugängen wird ausgewählt. Wer nicht die "als beste" erkannte Zugangsart nutzen möchte, kann manuell eine andere Zugangsart auswählen. Nachteilig bei diesen bekannten Verfahren ist zum einen die Frage, was ist die beste Zugangsart. Zu anderen muss der Nutzer selber tätig werden, um eine alternative Zugangsart auszuwählen. Die vorbekannten Lösungen stellen einen direkten statischen Zusammenhang zwischen Netz-Technologie und Sicherheitsanforderungen her. Das heißt beispielsweise bei Verwendung eines WLANs wird immer eine VPN Verbindung aufgebaut, jedoch bei Verwendung eines Ethernet-LANs niemals. Zudem wird bei der Verfügbarkeit einer bevorzugten Zugangsart eine bereits bestehende Zugangsart automatisch beendet, ohne vorab zu prüfen, ob die bevorzugte Zugangsart überhaupt eine Verbindung zum Heimat-Kommunikationsnetz beziehungsweise zum Zielnetz bereitstellen kann. D.h., die Kenntniss, dass an einen Standort eine bevorzugte Zugangsart vorhanden ist, stellt nicht sicher, dass über diese bevorzugte Zugangsart auch tatsächlich Daten übertragen werden können. Hierbei können bei einem Wechsel der Zugangsart Daten verloren gehen.

In der WO 2007/015574 A1 wird eine Lösung offenbart, bei der ein elektronisches Endgerät unterschiedliche Schnittstellen aufweist, wobei ein Wechsel zwischen diesen Schnittstellen möglich ist, ohne dass die Kommunikation unterbrochen wird. Dazu ist ein Multi-Interface Mobility Management (MIMM) Client auf dem elektronischen Endgerät vorhanden, der nach einer Handoff- oder Roaming-Operation entscheidet, welche Schnittstelle nach der Operation genutzt werden soll.

Die US 2007/0019670 A1 betrifft eine Lösung, die es ermöglicht, dass ein elektronisches Endgerät Zugang zu einer Vielzahl von Netzwerken unterschiedlichen Typs erhalten kann.

Aufgabe der Erfindung ist es, dem Benutzer eines elektronischen Endgerätes, insbesondere eines Computers, zu ermöglichen, dass sein elektronisches Endgerät mit minimaler Benutzer-Interaktion stets optimal und sicher mit dem Heimat-Kommunikationsnetz bzw. Zielnetz verbunden ist, um jederzeit optimalen Zugriff auf seine Daten und Anwendungen zu erhalten.

Erfindungsgemäß wird diese Aufgabe durch ein Verfahren mit den Merkmalen gemäß dem unabhängigen Patentanspruch 1 gelöst. Weitere Merkmale und Details der Erfindung ergeben sich aus den Unteransprüchen, der Beschreibung sowie der Zeichnung.

Gemäß der Erfindung wird die Aufgabe durch ein Verfahren zur Herstellung einer Kommunikationsverbindung von einem elektronischen Endgerät zu einem vordefinierten Heimat-Kommunikationsnetz, mit folgenden Schritten gelöst: Festlegen der gewünschten Zugangsarten, über die eine Verbindung zu dem Heimat-Kommunikationsnetz aufgebaut werden darf, der Sicherheitserfordernisse für jede gewünschte Zugangsart zur Erreichung des Heimat-Kommunikationsnetzes sowie der Reihenfolge der zu verwendenden Zugangsarten zur Herstellung der Verbindung zu dem Heimat-Kommunikationsnetz in einer Prioritätenliste;
Feststellen, dass über eine erste Zugangsart eine Verbindung zu dem Heimat-Kommunikationsnetz besteht, indem das elektronische Endgerät einen bekannten Ankerpunkt im Heimat-Kommunikationsnetz anfragt;
Bei Bestehen einer Verbindung, Empfangen einer Antwortnachricht von dem Ankerpunkt durch das elektronische Endgerät, in welcher angegeben ist wie das elektronische Endgerät mit dem Heimat-Kommunikationsnetz verbunden ist; Nach Feststellung, dass über eine erste Zugangsart eine Verbindung zu dem Heimat-Kommunikationsnetz besteht, wiederholtes Überprüfen durch das elektronische Endgerät durch wiederholtes Anfragen des Ankerpunktes im Heimat-Kommunikationsnetz, ob über wenigstens eine weitere Zugangsart eine zusätzliche Verbindung möglich ist;
Bei Empfang einer Antwortnachricht von dem Ankerpunkt, Überprüfen im elektronischen Endgerät, ob die wenigstens eine weitere Zugangsart in der Prioritätenliste festgelegt wurde;
Auswählen derjenigen Zugangsart mit der höchsten Priorität in der Prioritätenliste, wobei das elektronische Endgerät die erste Zugangsart und die wenigstens eine weitere Zugangsart hinsichtlich ihrer Qualitätsmerkmale der Verbindung vergleicht;
Automatisches Anpassen der Sicherheitserfordernisse an die ausgewählte Zugangsart; und
Herstellen einer Verbindung zu dem Heimat-Kommunikationsnetz über die ausgewählte Zugangsart, wobei bei Feststellung, dass eine Datenübertragung zwischen dem elektronischen Endgerät und dem Heimat-Kommunikationsnetz über die ausgewählte Zugangsart möglich ist, ein Wechsel des elektronischen Endgeräts zu der ausgewählten Zugangsart erfolgt.

Zunächst wird das Heimat-Kommunikationsnetz, das heißt das Zielnetz, zu dem eine Verbindung aufgebaut werden soll, festgelegt. Dies ist in der Regel ein Firmennetz, zu dem nur eine bestimmte Anzahl von ausgewählten Benutzern einen Zugriff erhalten soll. Ferner werden in einem ersten Schritt die Zugangsarten festgelegt, über die überhaupt eine Verbindung zu dem Heimat-Kommunikationsnetz aufgebaut werden dürfen. Hier entscheidet der Benutzer bereits welche Übertragungsmedien er überhaupt für geeignet erachtet. Für jede gewünschte Zugangsart werden ferner die entsprechenden Sicherheitserfordernisse festgelegt. Des Weiteren legt der Nutzer des elektronischen Endgerätes eine Reihenfolge für die Zugangsarten fest, die zur Herstellung der Verbindung zu dem Heimat-Kommunikationsnetz genutzt werden soll. Hierzu erzeugt er eine sogenannte-Prioritätenliste. So kann beispielsweise in der Prioritätenliste festgelegt werden, dass zunächst eine kabelgebundene Verbindung, wie beispielsweise eine Ethernet- oder eine RTC-Verbindung, anschließend eine WLAN-Verbindung und zuletzt eine GSM-Verbindung genutzt werden soll. Es kann aber auch in der Prioritätenliste festgelegt werden, dass eine zweite Zugangsart einer ersten nur dann bevorzugt wird, wenn bestimmte Qualitätsmerkmale bei der zweiten Zugangsart höher sind, als bei der ersten. So kann in der Prioritätenliste eine Zugangsart mehrfach an verschiedene Positionen ausgewählt sein. Beispielsweise kann festgelegt sein, dass eine UMTS-Verbindung einer WLAN-Verbindung bevorzugt wird, wenn die festgestellte aktuelle Übertragungsrate der UMTS-Verbindung größer ist, als die der WLAN-Verbindung. Anderseits kann festgelegt sein, dass die WLAN-Verbindung gegenüber der UMTS-Verbindung zu bevorzugen ist, wenn festgestellt wird, dass die Übertragungszeit von Datenpaketen bei der WLAN-Verbindung geringer ist. Diese Prioritätenliste kann jederzeit von dem Nutzer des elektronischen Endgerätes neu erstellt oder geändert werden.

In einem weiteren Schritt wird festgestellt, dass über eine erste Zugangsart eine Verbindung zu dem Heimat-Kommunikationsnetz besteht. Dieser Schritt wird durch das elektronische Endgerät, insbesondere eine Softwarekomponente des elektronischen Endgerätes, durchgeführt. Hierzu frägt das elektronische Endgerät, insbesondere die Softwarekomponente des elektronischen Endgerätes, einen bekannten Ankerpunkt im Heimat-Kommunikationsnetz an. Ist dieser Ankerpunkt nicht erreichbar, so bedeutet dies für das elektronische Endgerät, dass keine vollständige Verbindung zur Verfügung steht und damit auch keine Verbindung zu dem Heimat-Kommunikationsnetz aufgebaut werden kann. Falls jedoch eine Verbindung besteht, empfängt das elektronische Endgerät eine Antwortnachricht von dem Ankerpunkt. In der Antwortnachricht ist angegeben, wie das elektronische Endgerät mit dem Heimat-Kommunikationsnetz verbunden ist. Die Verbindung kann eine sichere lokale Verbindung innerhalb des Heimat-Kommunikationsnetzes, beispielsweise eine Ethernetverbindung, sein. Andererseits kann das elektronische Endgerät lokal, aber unsicher verbunden sein, beispielsweise durch einen ungesicherten WLAN Hotspot, Des weiteren kann die Verbindung eine gesicherte VPN-Verbindung sein.

Nach der Feststellung, dass über eine erste Zugangsart eine Verbindung zu dem Heimat-Kommunikationsnetz besteht, überprüft das elektronische Endgerät wiederholt, ob über wenigstens eine weitere Zugangsart eine weitere Verbindung möglich ist. So kann das elektronische Endgerät, insbesondere die Softwarekomponente des elektronischen Endgerätes, wiederholt eine weitere Anfrage zu dem Ankerpunkt des Heimat-Kommunikationsnetzes senden. In dieser weiteren Anfrage wird angefragt, über welche Zugangsart eine Verbindung von dem elektronischen Endgerät zu dem Heimat-Kommunikationsnetz besteht beziehungsweise welche Zugangsart zusätzlich bereitgestellt werden kann. Empfängt das elektronische Endgerät keine Antwortnachricht von dem Ankerpunkt des Heimat-Kommunikationsnetzes, so ist aktuell keine weitere Datenverbindungen zwischen dem elektronischen Endgerät und dem Heimat-Kommunikationsnetz möglich. Empfängt das elektronische Endgerät eine Antwortnachricht von dem Ankerpunkt des Heimat-Kommunikationsnetzes, überprüft das elektronische Endgerät anhand der Antwortnachricht, über welche Zugangsart eine Verbindung von dem elektronischen Endgerät zu dem Heimat-Kommunikationsnetz besteht bzw. welche Zugangsart zusätzlich bereitgestellt werden kann. Da wiederholt Antwortnachrichten von dem elektronischen Endgerät empfangen werden, ist das elektronische Endgerät ständig auf dem Laufenden, welche Zugangsart zusätzlich bereitgestellt werden können.

Ferner überprüft das elektronische Endgerät, ob die wenigstens eine weitere Zugangsart in der Prioritätenliste festgelegt wurde. Falls die wenigstens eine weitere Zugangsart in der Prioritätenliste festgelegt wurde, wird diejenige Zugangsart mit der höchsten Priorität in der Prioritätenliste ausgewählt.

Dabei vergleicht das elektronische Endgerät beziehungsweise eine Softwarekomponente auf dem elektronischen Endgerät, die erste und die wenigstens eine weitere Zugangsart, falls diese vorhanden sind, hinsichtlich ihrer Qualitätsmerkmale der Verbindung. Die Qualitätsmerkmale bestimmen die Reihenfolge der Zugangsarten in der Prioritätenliste. Dabei können Zugangsarten auch mehrfach in der Prioritätenliste aufgeführt sein. Die Reihenfolge ist von unterschiedlichen Qualitätsmerkmalen der Verbindung abhängig. Bevorzugt ist ein Verfahren, bei dem die Reihenfolge der zu verwendenden Zugangsarten in der Prioritätenliste anhand der Bandbreite der Datenübertragung, des Jitters der Datenübertragung, der Latenz der Datenübertragung, der Netzauslastung, des Datendurchsatzes, der Fehlerrate der Datenübertragung, der Ausfallsicherheit der Datenübertragung, der Empfangsstärke bei der Datenübertragung, der Übertragungskosten und/oder des Signalisierungsprotokolls bestimmbar ist. D.h., die Qualität einer Verbindung ist von einer Vielzahl verschiedener Faktoren abhängig. Je größer die Bandbreite, desto größer kann der Datenfluss sein, der die Verbindung durchströmt. Die Übertragungsrate ist somit unter anderem von der Bandbreite der Verbindung abhängig. Die Bandbreite sagt aus, wie viel Bits pro Zeiteinheit übertragen werden können. Hier muss allerdings beachtet werden, dass die optimal mögliche Bandbreite und die tatsächliche Bandbreite unterschiedlich sein können. Die Qualität der Verbindung hängt auch von dem sogenannten Jitter ab. Der Jitter ist ein Indikator dafür, wie flüssig der Datenverkehr zwischen dem Sender und dem Empfänger ist. D.h. als Jitter werden die schwankenden Übertragungszeiten bezeichnet. Er berechnet sich aus der Differenz der Zeitspannen, die einzelne Sprach- oder Video-Pakete vom Sender zum Empfänger brauchen. Die Latenz, ein weiteres Qualitätsmerkmal gibt die Zeit an, die ein Paket mit Sprache und Video für die Kodierung beim Sender, die Übertragung und die Dekodierung beim Empfänger braucht. Je kleiner diese Zeitspanne ist, desto verzögerungsfreier ist die Verbindung.Ein weiterer Faktor, der die Qualität der Verbindung beeinflusst, ist die Netzauslastung. Durch ausgelastete Netzknoten oder falsch abgmessene Jitter-Puffer können Sprachpakete verloren gehen. Ferner hängt die Qualität der Verbindung von der Fehlerrate bzw. der Ausfallhäufigkeit der Datenübertragung ab. Werden Datenpakete nur unvollständig oder gar nicht übertragen ist dies ein erheblicher Nachteil. Daher sind Zugangsarten bevorzugt, die eine hohe Ausfallsicherheit bieten und bei denen keine oder kaum Datenpakete verloren gehen. Des Weiteren ist die Qualität der Verbindung von der Empfangsstärke bzw. der Signalstärke bei der Datenübertragung zwischen einem Endgerät und beispielsweise einem WLAN-Router ab.

Anrufe werden über ein von der Sprachkommunikation komplett getrenntes Signalisierungsprotokoll auf- bzw. abgebaut. Auch die Aushandlung der Verbindungs- und Codierparameter für die Sprachübertragung erfolgt über ein solches Signalisierungsprotokoll. Am weitesten verbreitet ist das SIP-Protokoll (SIP = Session Initiation Protocol. Verschiedene Signalisierungsprotokolle haben unterschiedliche Eigenschaften und beeinflussen die Sprachqualität.

Die Verbindung kann auch von den Übertragungskosten abhängig gemacht werden. Die Prioritätenliste bzw. die Reihenfolge der Zugangsarten der Verbindung wird von diesen Qualitätsmerkmalen abhängig gemacht. Die Reihenfolge der Zugangsarten ist individuell festlegbar. Hierbei entscheidet der Nutzer des elektronischen Endgerätes, welche Kombination von Qualitätsmerkmalen er bevorzugt. In der Prioritätenliste wird die Reihenfolge somit durch die Priorität der Zugangsarten bestimmt. Die Zugangsart mit der höchsten Priorität wird einer Zugangsart mit einer niedrigeren Priorität bevorzugt.

Nach dem Auswählen der Zugangsart mit der höchsten Priorität passt das elektronische Endgerät automatisch die Sicherheitsanfordernisse an die ausgewählte Zugangsart an und stellt eine Verbindung zu dem Heimat-Kommunikationsnetz über die ausgewählte Zugangsart her. Weisen zwei zusätzlich verfügbare Zugangsarten eine gleiche Performance hinsichtlich der Übertragungsleistung, der Übertragungsqualität und der Übertragungskosten auf, wird diejenige Zugangsart ausgewählt, die in der Prioritätenliste eine höhere Priorität aufweist. Diese Reihenfolge ist durch den Nutzer festgelegt worden.

In einem abschließenden Schritt, d.h. bei Feststellung, dass eine Datenübertragung zwischen dem elektronischen Endgerät und dem Heimat-Kommunikationsnetz über die ausgewählte Zugangsart möglich ist, wechselt das elektronische Endgerät zu der ausgewählten Zugangsart. Wenn keine Datenübertragung möglich ist, behält das elektronische Endgerät die bestehende Zugangsart bei.

Es findet eine mehrfache Überprüfung der Zugangsarten statt. Ein Wechsel zu einer ausgewählten Zugangsart mit einer besseren Performance findet aber erst statt, wenn überprüft worden ist, dass die ausgewählte Zugangsart überhaupt eine Datenübertragung ermöglicht. Hierdurch wird vermieden, dass Daten bei dem Wechsel zu einer anderen Zugangsart verloren gehen. Erst wenn eine weitere aus der Prioritätsliste festgelegte Zugangsart verfügbar ist und die Qualitätsmerkmale, beispielsweise die Übertragungsleistung und die Übertragungsqualität, dieser Zugangsart besser und/oder die Übertragungskosten dieser Zugangsart niedriger, als die der bestehenden Zugangsart sind, wird die automatische Anpassung der Sicherheitsanfordernisse an die ausgewählte Zugangsart vollzogen und zu dieser Zugangsart gewechselt.

Die Erfindung stellt automatisch stets eine optimale und sichere Verbindung zum Heimat-Kommunikationsnetz beziehungsweise Zielnetz bereit. Die Erfindung gewährleistet, dass eine alte bestehende, als schlechter eingestufte, Verbindung erst beendet wird, bevor überprüft wurde, ob die neue bessere Verbindung auch einen Zugang zum Heimat-Kommunikationsnetz bereitstellen und Daten sicher übertragen kann. Es wird aber nur zu einer Zugangsart gewechselt, die auf der Prioritätenliste steht. So wird durch dieses Verfahren nur eine Zugangsart ausgewählt, die auch von dem Nutzer gewünscht wurde. Hierdurch wird die gewünschte Sicherheit gewährleistet. Der Nutzer erfährt von diesem Wechsel nicht zwangsläufig, aber er weiß, dass nur zu Zugangsarten gewechselt wird, die auf der Prioritätenliste stehen. Ferner wird sichergestellt, dass keine Daten bei dem Wechsel auf eine andere Zugangsart verloren gehen. Dies wird dadurch gewährleistet, dass vor einem Wechsel überprüft wird, ob die neue ausgewählte Zugangsart überhaupt Daten übertragen kann. So kann es vorkommen, dass eine bessere Zugangsart existiert, die eine höhere Übertragungsleistung, eine bessere Übertragungsqualität und ggf. auch noch günstiger ist, als die bestehende Zugangsart, diese aber aufgrund von technischen Problemen kurzfristig kein Daten übertragen kann.

Bei dem Vergleich zwischen der bestehenden und der zusätzlich bereitstellten Zugangsarten kann ein oder mehrere Parameter, d.h. Qualitätsmerkmale, berücksichtigt werden. So kann die Beurteilung der Zugangsarten ausschließlich von der Übertragungsleistung oder der Übertragungsqualität abhängig gemacht werden. Es können aber auch Kombinationen aus mehreren Qualitätsmerkmalen in Betracht gezogen werden. Dabei findet eine Gewichtung zwischen den einzelnen Parametern statt. Wie die einzelnen Parameter gewichtet werden, kann der Nutzer individuell festlegen. So kann festgelegt werden, dass eine Zugangsart eine schlechte Priorität in der Prioritätenliste bekommt, wenn die Übertragungsleistung zwar hoch ist, aber die Übertragungsqualität aber schlecht ist. Weisen zwei Zugangsarten gleiche Leistungen und gleiche Kosten auf, wählt das elektronische Endgerät diejenige Zugangsart aus, die in der Prioritätenliste höher eingestuft ist.

Durch das wiederholte überprüfen, ob über wenigstens eine weitere Zugangsart eine weitere Verbindung möglich ist, beispielsweise durch das wiederholte Anfragen des Ankerpunktes im Heimat-Kommunikationsnetz und die Überprüfung der Antwortnachrichten des Ankerpunktes, wird permanent sichergestellt, dass die bestmögliche Verbindung bereitgestellt wird und dass die Verbindung ständig aufrecht gehalten wird. Der Nutzer ist immer mit der optimalen Zugangsart online. Wird die Übertragungsleistung einer bestehenden Zugangsart schlechter, so wird aufgrund des permanenten Vergleichs der Übertragungsleistung mit den Übertragungsleistungen anderer Zugangsarten sichergestellt, dass die Zugangsart mit der höheren Übertragungsleistung für die Verbindung ausgewählt wird.

Stellt das elektronische Endgerät fest, dass zwar eine Verbindung zu dem Heimat-Kommunikationsnetz besteht, diese aber nicht als bevorzugte Zugangsart in der Prioritätenliste festgelegt wurde, wechselt das elektronische Endgerät automatisch zu einer in der Prioritätenliste aufgeführten Zugangsart, wenn diese verfügbar ist.

Durch das Verfahren gehen dem Nutzer der Verbindung keine Daten verloren, wenn eine Verbindung abreißt, und der Nutzer muss sich auch nicht umständlich neu in das Heimat-Kommunikationsnetz einwählen. Der Nutzer muss keine aufwendige manuelle Auswahl einer anderen Zugangsart tätigen.
Bevorzugt ist ein Verfahren, bei dem bei der Feststellung, dass eine netzinterne Verbindung zu dem Heimat-Kommunikationsnetz besteht, kein Wechsel zu einer anderen Zugangsart erfolgt. Wird dagegen festgestellt, dass keine netzinterne Verbindung zu dem Heimat-Kommunikationsnetz besteht, wird eine VPN-Verbindung über das Internet oder über ein dem Heimat-Kommunikationsnetz zugeordnetes Mobilfunknetz mittel eines nutzerspezifischen Zugriffpunktes, über die sogenannte Corporate-APN (APN = Access Point Name) zu dem Heimat-Kommunikationsnetz über die ausgewählte Zugangsart hergestellt. In der Regel erfolgt ein Aufbau einer VPN-Verbindung, einer sogenannten Remote-Verbindung, über das Internet. Nut wenn eine spezielle Corporate-APN-Verbindung zwischen dem Heimat-Kommunikationsnetz und einem dem Heimat-Kommunikationsnetz zugeordneten Mobilfunknetz möglich ist, wird die Verbindung direkt über das Mobilfunknetz aufgebaut und nicht über das Internet. Die Corporate-APN-Verbindung stellt eine direkt Verbindung für spezielle Nutzer dar. So kann auf der SIM-Karte dieser Nutzer eingestellt sein, dass diese über den Corporate-APN eine VPN-Verbindung direkt zu dem Heimat-Kommünikationsnetz herstellen.

Über das Internet sind verschiedene Zugangsarten von dem elektronischen Endgerät möglich. So ist beispielsweise eine sichere VPN-Verbindung über eine DSL-Verbindung von einem elektronischen Endgerät über das Internet zu dem Heimat-Kommunikationsnetz möglich. Der Zugang zu der DSL-Verbindung kann beispielsweise über eine LAN- oder WLAN-Verbindung realisiert werden. So können in dem elektronischen Endgerät verschiedene Profil für den Nutzer gespeichert sein. Ein Profil kann den Namen des Nutzers, ein Passwort und die Zugangsart umfassen. Der Zugriff auf das Heimat-Kommunikationsnetz über eine DSL-Verbindung kann beispielsweise über eine WEP. WAP und insbesondere über eine WAP2-Verschlüsselungsmethode gesichert werden.
Neben der Verbindung über einen Computer eines Mitarbeiters des Anbieters des Heimat-Kommunikationsnetzes, dem sogenannten Zugriff aus das Heimat-Kommunikationsnetz von Zuhause, kann eine VPN-Verbindung über einen öffentlichen Hotspot erflogen. Über diesen Hotspot, in der Regel WLAN-Hotspot, kann ein Gast des Heimat-Kommunikationsnetzes über das Internet auf das Heimat-Kommunikationsnetz zugreifen. Allerdings nur über eine sichere VPN-Verbindung. D.h., unter der Nutzung des Internets kann sich beispielsweise ein Gast in das Heimat-Kommunikationsnetz einwählen. Zunächst findet eine Einwahl ins Internet statt, beispielsweise per Laptop mittels eines sogenannten Point-to-Point-Protokolls. Hierzu kann ein beliebiger Provider und eine jede verfügbare Zugangstechnik, z.B. DSL oder HSCSD, verwendet werden. Anschließend erfolgt der Aufbau einer sicheren Verbindung zwischen dem elektronischen Endgerät, d.h. dem Nutzer und dem VPN-Server des Heimat-Kommunikationsnetzes. Hierzu muss sich das elektronische Endgerät gegenüber dem VPN-Server authentisieren. Das erfolgt im einfachsten Fall per Username/ Password, bei höheren Sicherheitsanforderungen mittels einer Token-Card oder öffentlichem Schlüssel/ Zertifikat. Erst nach einer erfolgreichen Authentifizierung wird ein verschlüsselter IPsec-Tunnel aufgebaut, über den dann ein absolut abhörfreier Datenverkehr ins Heimat-Kommunikationsnetz erfolgen kann. Hierbei ist das elektronische Endgerät im Allgemeinen so konfiguriert, dass es nach dem Aufbau des Tunnels keine Verbindung zum Internet mehr besitzt und von dort auch nicht mehr angesprochen werden kann. Gleichzeitig bekommt das elektronische Endgerät eine IP-Adresse aus dem Heimat-Kommunikationsnetz zugewiesen, z.B. eine private Adresse, die bei der Remote-Verbindung eindeutig mit dem Usernamen des Anwenders gekoppelt ist. Auf diese Weise ist es möglich, bei Bedarf das firmenseitige Ende des Tunnels noch durch eine Firewall zu sichern.

Alternativ kann aus einem Mobilfunknetz eine Verbindung über das Internet aufgebaut werden. Hier kann zwischen einem WEP-APN und einer Event-APN unterschieden werden. Die Event-APN-Verbindung stellt eine zeitlich buchbare Internet-Nutzung dar. Beispielsweise kann eine Internet-Nutzung über eine oder zwei Stunden gebucht werden. So können beispielsweise Notebook-Besitzer, die nur gelegentlich mobil im Internet gehen wollen, um ins Heimat-Kommunikationsnetz zu gelangen, eine zeitlich begrenzte Internet-Session buchen. So behalten Sie Ihre Kosten im Blick, selbst wenn Sie mobile Datendienste im Ausland nutzen. Während der Sitzungsdauer von 30 Minuten,1 oder 24 Stunden können Sie sich beliebig oft ein- und auswählen. Sie bezahlen nur für die Dauer der gebuchten Sitzung. Die Abrechnung erfolgt einfach über ein spezielles Konto, eine spezielle Karte, eine Kreditkarte oder eine Mobilfunkrechnung.

Bei der WEP-APN-Verbindung wird keine einmalige Zugangsberechtigung vergeben, wie bei der Event-APN-Verbindung, sondern der Nutzer schließt mit dem Heimat-Kommunikationsnetz eine dauerhafte Nutzungsberechtigung, beispielsweise ein 24-Monats-Vertrag, ab. Die Abrechnung erfolgt wahlweise mit einem Inklusivguthaben oder nach Minutenpreisen.

Bevorzugt ist des weiteren ein Verfahren, bei dem bei der Herstellung der VPN-Verbindung zu dem Heimat-Kommunikationsnetz über die ausgewählte Zugangsart die Datenübertragung zwischen dem elektronischen Endgerät und dem Heimat-Kommunikationsnetz über alle Zugangsarten blockiert wird, bis der Wechsel zu der ausgewählten Zugangsart durchgeführt und die Verbindung über die erste Zugangsart beendet ist. Wenn zwei Verbindungen gleichzeitig geöffnet sind, besteht die Gefahr, dass Unbefugte Zugriff auf die übertragenen Daten erlangen können. Damit dies nicht erfolgt, wird der Datenfluss kurzzeitig blockiert.

Durch Anfragen eines Ankerpunktes im Internet kann festgestellt werden, ob über wenigstens eine weitere Zugangsart eine Verbindung zu dem Heimat-Kommunikationsnetz über das Internet besteht, wobei durch den Ankerpunkt die aktuelle IP-Adresse bzw. die NAT-IP-Adresse des elektronischen Endgerätes dem elektronischen Endgerät übertragen wird. Dieser Ankerpunkt, der physikalisch nichts mit dem Ankerpunkt im Heimat-Kommunikationsnetz zu tun hat, ist nur im Internet erreichbar. Dieser Ankerpunkt wird von dem elektronischen Endgerät angefragt, um zu prüfen, ob eine Verbindung zum Internet, besteht. Der Ankerpunkt, beispielsweise ein Skript zur Verfügung gestellt auf einem Web-Server, beantwortet die Anfrage der Client-Software mit der jeweiligen aktuellen IP-Adresse des elektronischen Endgerätes, d.h. des Computers. D.h., in der Antwortnachricht ist vorzugsweise die aktuelle IP-Adresse beziehungsweise die NAT-IP-Adresse des elektronischen Endgerätes angegeben. Empfängt das elektronische Endgerät eine IP-Adresse oder eine NAT-IP-Adresse, weiß das elektronische Endgerät, dass eine Verbindung über das Internet zu dem Heimat-Kommunikationsnetz möglich ist.

Des weiteren ist bei dem Verfahren bevorzugt, dass der Zugriff auf das Heimat-Kommunikationsnetz über das Internet oder über das dem Heimat-Kommunikationsnetz zugeordnete Mobilfunknetz mittel eines nutzerspezifischen Zugriffpunktes (Corporate APN) über einen Router des Heimat-Kommunikationsnetz durchgeführt wird. Der Router des Heimat-Kommunikationsnetzes, insbesondere ein WLAN-Router kann über eine LAN-Verbindung auf den Ankerpunkt des Heimat-Kommunikationsnetzes zugreifen. Der Router des Heimat-Kommunikationsnetzes steuert über die LAN-Verbindung den Ankerpunkt des Heimat-Kommunikätionsnetzes an. Zur Herstellung einer VPN-Verbindung von dem elektronischen Endgerät zu dem Heimat-Kommunikationsnetz über das Internet ist dem Router des Heimat-Kommunikationsnetzes vorteilhafterweise eine demilitarisierte Zone vorgeschaltet. Diese demilitarisierte Zone weist bevorzugt zwei Firewalls und ein zwischen die Firewalls zwischengeschaltetes VPN-Gateway auf.

Die demilitarisierte Zone stellt ein separates Netzwerk dar, das sich zwischen dem internen LAN und dem Internet befindet und dadurch das Heimat-Kommunikationsnetzes gegen andere Netze, wie dem Internet, abschirmt.

Bevorzugt ist ein Verfahren, bei dem bei der automatischen Anpassung der Sicherheitserfordernisse an die ausgewählte Zugangsart die Firewall- und http-Proxy-Einstellungen automatisch geändert werden. Die Sicherheitserfordernisse sind zuvor von bzw. in dem elektronischen Endgerät festgelegt worden, so dass dieses bei der Auswahl einer anderen Zugangsart diese übernehmen kann. So werden nach der Auswahl einer neuen Zugangsart die Firewall- und http-Proxy-Einstellungen automatisch an die neue Zugangsart angepasst. Hierdurch ist stets die erforderliche Sicherheit und Stabilität der Datenverbindung gewährleistet. Zu den Sicherheitserfordernissen gehören ferner moderne Verschlüsselungsverfahren, die den Datenverkehr zwischen dem elektronischen Endgerät und dem Heimat-Kommunikationsnetz schützt. So kann festgelegt werden, welches Verschlüsselungsverfahren bei welcher Zugangsart gewählt werden soll.
Über die http-Proxy-Einstellungen und die Firewalleinstellungen wird die Sicherheit der Verbindung über das Internet erhöht. So können Zugangskontrollen durchgeführt werden und Zugriffe auf bestimmte Seiten oder Dokumente verweigert oder gewährt werden. Über Proxy-Server können Daten und Seiten zwischengespeichert werden, was die Wartezeiten zum Aufbau bestimmter Seiten reduziert, da einmal aufgerufene Web-Seiten nicht immer wieder über den heimatlichen Host neu ansteuern zu müssen.

Ferner ist ein Verfahren bevorzugt, bei dem die gewünschten Zugangsarten zur Herstellung einer Verbindung über das Internet zu dem Heimat-Kommunikationsnetz, die Sicherheitserfordernisse für jede gewünschte Zugangsart sowie der Reihenfolge der zu verwendenden Zugangsarten zur Herstellung der Verbindung zu dem Heimat-Kommunikationsnetz anhand einer Prioritätenliste konfigurierbar sind. Hierdurch bestimmt der Nutzer, welche Zugangsarten überhaupt genutzt werden sollen. Dies gewährleistet dem Nutzer eine hohe Sicherheit seiner Verbindung über das Internet, da er selbst bestimmen kann, über welches Übertragungsmedium die Verbindung aufgebaut werden soll. Zur Konfiguration kann der Nutzer sowohl die Eingabeeinheit des elektronischen Endgerätes, beispielsweise die Tastatur eines Computer oder eines Mobiltelefons, nutzen, als auch über das Heimat-Kommunikationsnetz entsprechende Konfigurationen erhalten.

Wie bereits zuvor ausgeführt, wird zu einer neuen Zugangsart erst dann gewechselt, wenn sicher ist, dass eine Datenverbindung zu der neuen Zugangsart auch möglich ist. Daher ist ein Verfahren bevorzugt, bei dem während der Anpassung der Sicherheitserfordernisse an die ausgewählte Zugangsart und des Wechselns zu dieser Zugangsart, das IP-Routing erst dann auf die ausgewählte Zugangsart angepasst wird, wenn die Verbindung über die ausgewählte Zugangsart besteht.

Durch das Steuern des IP-Routing wird sichergestellt, dass laufende Anwendungen nicht unnötig beim automatischen Wechsel der Zugangsart den Zugriff auf das Heimat-Kommunikationsnetz verlieren. Während die Verbindung zu einer neuen Zugangsart, d.h. einem neuen Zugangsnetz, aufgebaut wird, muss die Verbindung zum alten Zugangsnetz gehalten werden. Dafür wird das IP-Routing automatisch so eingestellt werden, dass die Nutzdaten laufender Anwendungen über die alte Zugangsart in das Heimat-Kommunikationsnetz gelangen. Wenn die Prüfung der neuen Zugangsart erfolgreich war, d.h. eine Datenverbindung über die ausgewählte Zugangsart besteht, wird das IP Routing derart geändert, so dass die Nutzdaten laufender Anwendungen über die neu ausgewählte Zugangsart in das Heimat-Kommunikationsnetz gelangen. Die alte Verbindung über das Internet wird erst dann beendet.
Wenn die Prüfung des neuen Zugangsnetzwerkes bzw. der neu ausgewählten Zugangsart nicht erfolgreich war, können eventuell andere vorhandene Zugangsnetzwerke bzw. Zugangsarten überprüft werden, oder die vorhandene Verbindung wird einfach weiter genutzt.

Bei dem Verfahren können unterschiedliche Prioritätslisten festgelegt werden, Bevorzugt ist, wenn für jedes Land bzw. Bundesland bzw. für jede Region unterschiedliche Prioritätslisten festlegt werden. Hierdurch weiß das elektronische Endgerät, welche Zugangsarten beispielsweise im Inland oder im Ausland bevorzugt verwendet werden sollen. Der Nutzer kann festlegen, dass beispielsweise in Deutschland die Reihenfolge der bevorzugten Zugangsart, wie folgt aussieht: Ethernet, WLAN, Mobilfunknetz. Im Ausland kann die Reihenfolge beispielseise so aussehen: Mobilfunknetz, WLAN, Ethernet. Dabei ist eine Vielzahl von Unterscheidungen möglich.

Wie bereits ausgeführt ist bei dem Verfahren bevorzugt, dass bei der automatischen Anpassung der Sicherheitsanfordernisse an die ausgewählte Zugangsart und der Herstellung der Verbindung zu dem Heimat-Kommunikationsnetz über die ausgewählte Zugangsart eine VPN-Verbindung aufgebaut wird, falls die Zugangsart nicht Teil des Heimat-Kommunikationsnetz ist. Stellt das elektronische Endgerät aufgrund der Antwortnachricht des Ankerpunktes in Heimat-Kommunikationsnetz fest, dass die Zugangsart bzw. das Zugangsnetz nicht Teil des Heimat-Kommunikationsnetzes ist, d.h. beispielsweise kein kabelgebundene Verbindung aufweist, so wird geprüft, ob eine Corporate-APN-Verbindung vorliegt oder die jeweilige Zugangsart eine vollständige Verbindung zum Internet ermöglicht und ggf. ein VPN-Gateway-erreichbar ist. Über das VPN-Gateway erfolgt ein sogenannter Remote-Zugriff auf das Heimat-Kommunikationsnetz. D.h., ist ein Remote-Zugriff auf das Heimat-Kommunikationsnetz erforderlich, wird eine VPN-Verbindung aufgebaut, wenn die Sicherheitserfordernisse dies erfordern.

Die Ankerpunkte in dem Internet bzw. in dem Heimat-Kommunikationsnetz können als Skripte ausgebildet sein. Durch Skripte können Abläufe oder Komponenten gesteuert werden. So kann das Skript im Heimat-Kommunikationsnetz feststellen, ob eine und wenn welche Zugangsart zwischen dem elektronischen Endgerät und dem Heimat-Kommunikationsnetz besteht.

Bevorzugt ist ferner ein Verfahren, bei dem das elektronische Endgerät automatisch ein Login-Portal erkennt und die Anmelde-/Bezahlseite des Login-Portals darstellt. Hierdurch erkennt das elektronische Endgerät beispielsweise bei WLAN Hotspots an Flughäfen und Hotels oder bei einer WebSession automatisch Informationen über die Zugangsart. Ferner werden dem Nutzer durch die Anzeige der Anmelde-/Bezahlseite die Bedingungen der Zugangsart verdeutlicht.

Durch die Erfindung stellt das elektronische Endgerät, in der Regel ein Computer, automatisch stets eine sichere Datenverbindungen zu einem vorab durch eine Konfiguration festgelegten "Heimat"-Kommunikationsnetz bzw. Zielnetz, z.B. einer Office-IT, bereit. Somit hat der Anwender mit seinem elektronischen Endgerät einfach, das heißt mit minimaler Benutzerinteraktion, z.B. lediglich einer Passwort-Eingabe, Zugriff auf die Daten-und Anwendungen, die das Heimat-Kommunikationsnetz bereitstellt. Die Erfindung ermittelt dazu automatisch welche verfügbare Zugangsart bzw. welches verfügbare Zugangsnetz, z.B. Ethernet, WLAN, Mobilfunknetz, etc., am besten geeignet ist und verwendet diese bestens geeignete Zugangsart, um in das Heimat-Kommunikationsnetz zu gelangen. Die Performance der aktuell verwendeten Zugangsart wird kontinuierlich überwacht und gegebenenfalls automatisch auf eine bessere verfügbar gewordene Zugangsart gewechselt.

Der Benutzer bestimmt vorab generell, welche Zugangsarten genutzt werden dürfen, nach welchen Prioritäten die Auswahl der Zugangsarten erfolgen und welche Sicherheitsrichtlinien gelten sollen.

Die Erfindung stellt automatisch stets eine optimale und sichere Verbindung über das Internet zum Heimat-Kommunikationsnetz beziehungsweise Zielnetz bereit. Damit gewährleistet ist, dass eine alte bestehende, als schlechter eingestufte, Verbindung nicht bereits beendet wird, bevor überprüft wurde, ob die neue bessere Verbindung auch einen Zugang zum Heimat-Kommunikationsnetz bereitstellen kann.

Zur Sicherung der Verbindung in das Heimat-Kommunikationsnetz kann eine VPN-Verbindung aufgebaut werden. Das heißt, das elektronische Endgerät steuert eine VPN-Client-Software und stellt automatisch eine sichere Verbindung zum VPN-Gateway des Heimat-Kommunikationsnetzes her, wenn dies die Sicherheitsrichtlinien der IT erfordern, wie beispielsweise bei einem Zugang über einen Public Hotspot. Wenn das elektronische Endgerät, insbesondere der Computer, direkt mit dem Heimat-Kommunikationsnetz verbunden ist, wird keine VPN-Verbindung aufgebaut, das heißt eventuell bestehende VPN-Verbindungen werden durch die Erfindung automatisch beendet.

Das Verfahren ermöglicht es einem Nutzer eines elektronischen Endgerätes, dass sein elektronisches Endgerät mit minimaler Benutzer-Interaktion stets optimal und sicher mit dem Heimat-Kommunikationsnetz bzw. Zielnetz verbunden ist, um jederzeit optimalen Zugriff auf seine Daten und Anwendungen zu erhalten. Der Benutzer bestimmt vorab generell, welche Zugangsnetze genutzt werden dürfen, nach welchen Prioritäten die Auswahl des Zugangsnetzes erfolgen soll und welche Sicherheitsrichtlinien gelten.

Der Kern der Erfindung besteht aus folgenden Eigenschaften:
- Automatische Auswahl des optimalen Zugangsnetzes anhand konfigurierbarer Prioritätslisten für das Inland und Ausland, wie beispielsweise Inland: Ethernet-LAN, WLAN, UMTS Mobilfunknetz.
- Automatische Anpassung der Firewall-und HTTP-Proxy Einstellungen abhängig vom Zugangsnetz bzw. der Zugangsart.
- Automatische Erkennung eines Login-Portals, beispielsweise bei WLAN Hotspots an Flughäfen und Hotels, oder Vodafone WebSessions, sowie Anzeige der Anmelde-/Bezahlseite.
- Automatische Prüfung, ob das jeweilige Zugangsnetz Teil des Heimat Kommunikationsnetz ist.
   a) Andernfalls Prüfung, ob das jeweilige Zugangsnetz eine vollständige Verbindung zum Internet bereitstellt und gegebenenfalls ein VPN-Gateway erreichbar ist, für einen Remote-Zugriff auf das Heimatskommunikationsnetz.
   b) Bei einem Remote-Zugriff auf das Heimat-Kommunikationsnetz Aufbau einer VPN-Verbindung, wenn die Sicherheitsrichtlinien der IT dies erfordert.
- Kontinuierliche automatische Überwachung der bestehenden Verbindung hinsichtlich der Übertragungsleistung, der Übertragungsqualität und der Übertragungskosten. Gegebenenfalls automatischer Wechsel auf ein besseres Zugangsnetz, wenn möglich.

Der Kern der Erfindung besteht aus folgenden Komponenten:
- Eine sogenannte Client-Softwarekomponente auf dem elektronischen Endgerät, die automatisch mit dem Betriebssystem gestartet wird und kontinuierlich im Hintergrund läuft.
- Einen Ankerpunkt, beispielsweise kein Skript zur Verfügung gestellt auf einem Web-Server, der nur im Internet erreichbar ist. Dieser Ankerpunkt wird angefragt, um zu prüfen, ob eine Verbindung zum Internet besteht. Das Skript beantwortet die Anfrage des elektronischen Endgerät bzw. der Client-Softwarekomponente mit der jeweiligen aktuellen IP-Adresse des Computers, eventuell mit einer NAT-IT Adresse. Wenn das Skript nicht erreichbar ist, bedeutet dies für das elektronische Endgerät, dass die Zugangsart bzw. das Zugangsnetz keine vollständige Verbindung zum Internet zur Verfügung stellt.
- Einen Ankerpunkt, beispielsweise ein Skript zur Verfügung gestellt auf einem Webserver, der nur innerhalb des Heimat-Kommunikationsnetzes erreichbar ist. Das Skript ist im Heimat-Kommunikationsnetz liefert drei verschiedene Antworten an das elektronische Endgerät bzw. die Client-Softwarekomponente zurück:
   a) der Computer ist via VPN-Verbindung, d.h. Remote-Verbindung, mit dem Heimat-Kommunikationsnetz verbunden.
   b) der Computer ist sicher lokal, beispielsweise via Ethernet im Büro, mit dem Heimat-Kommunikationsnetz verbunden.
   c) der Computer ist lokal, aber unsicher, beispielsweise via ungesicherten WLAN Hotspot in einer Konferenzzone), verbunden.

Diese Informationen können beispielsweise anhand der IP-Adresse des Computers abgelesen werden.

Die Erfindung stellt automatisch stets eine optimale und sichere Verbindung zum Heimat-Kommunikationsnetz beziehungsweise Zielnetz bereit. Damit gewährleistet ist, dass eine alte bestehende als schlechter eingestufte Verbindung nicht bereits beendet wird, bevor überprüft wurde, ob die neue bessere Verbindung auch einen Zugang zum Heimat-Kommunikationsnetz bereitstellen kann, sind zusätzliche Maßnahmen notwendig.
Durch die Maßnahmen wird sichergestellt, dass laufende Anwendungen nicht unnötig beim automatischen Wechsel der Zugangsart bzw. des Zugangsnetzes den Zugriff auf das Heimat-Kommunikationsnetz verlieren. Während die Verbindung zu einem neuen Zugangsnetzwerk aufgebaut wird, muss die Verbindung zum alten Zugangsnetz gehalten werden. Dafür muss das IP-Routing automatisch so eingestellt werden, dass die Nutzdaten laufende Anwendungen über die alte Zugangsart bzw. Netzverbindung in das Heimat-Kommunikationsnetz gelangen. Wenn die Prüfung der neuen Zugangsart bzw. des neuen Zugangsnetzwerkes erfolgreich war, kann das IP-Routing geändert werden, so dass die Nutzdaten laufender Anwendungen über die neue Zugangsart bzw. das neue Zugangsnetz in das Heimat-Kommunikationsnetz gelangen. Die alte Verbindung kann dann anschließend beendet werden.
Wenn die Prüfung der neuen Zugangsart bzw. des neuen Zugangsnetzwerkes nicht erfolgreich war, können eventuell andere vorhandene Zugangsart/Zugangsnetzwerke überprüft werden, oder die vorhandene Verbindung wird einfach weiter genutzt.

Laptop-Benutzer wechseln in der Regel im Laufe eines Tages die Zugangsart bzw. das Zugangsnetz ihn ihr spezifisches Heimat-Kommunikationsnetz mehrfach. Die Erfindung unterstützt den Nutzer, indem sie automatisch immer eine für den jeweiligen Standort optimale Verbindung zum Heimat-Kommunikationsnetz bereitstellt und die dafür notwendigerweise notwendigen Nutzereingriffe auf ein Minimum, beispielsweise die Eingabe eines Sicherheits-Tokens, reduziert. Die Erfindung erfordert keine zusätzliche Serverkomponente im Heimat-Kommunikationsnetz.

Die Erfindung wird nun anhand eines Ausführungsbeispiels unter Bezugnahme auf die beiliegende Zeichnung näher erläutert. Es zeigt:

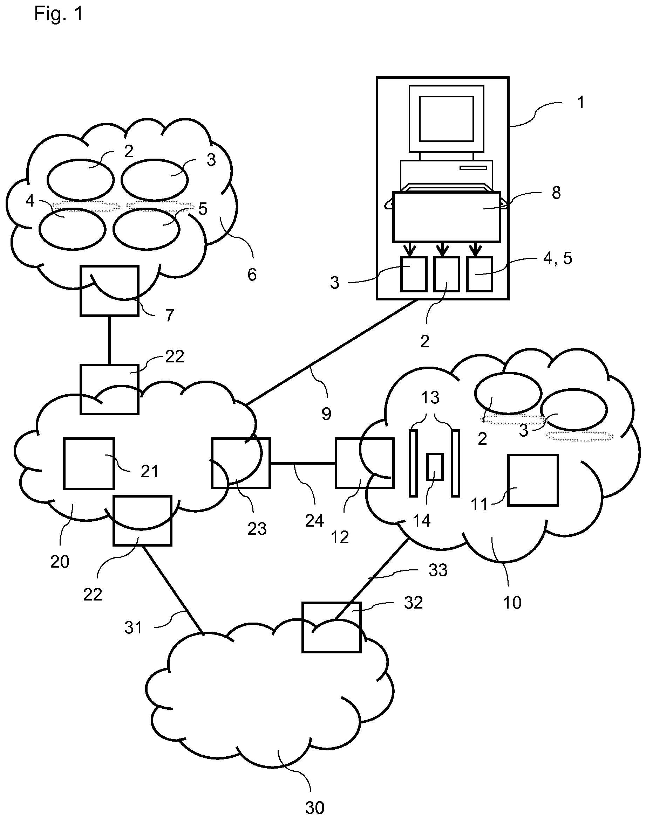

- Figur 1: eine schematische Darstellung einer Verbindung über das Internet eines elektronischen Enderätes mit einem Heimat-Kommunikationsnetz

In der Fig. 1 ist schematisch eine Verbindung über das Internet eines elektronischen Enderätes 1, hier eines Computers, mit einem Heimat-Kommunikationsnetz 10 dargestellt. In dem Besuchernetz 6 sind die verschiedenen Zugangsarten, wie WLAN 2, LAN 3, GPRS 4 oder UMTS 5, dargestellt. Dies ist nicht abschließend. Es können weitere Zugangsarten, wie Bluetooth, Zigbee, IRDA, etc., vorgesehen sein.

Bei dem erfindungsgemäßen Verfahren wird zunächst das Heimat-Kommunikationsnetz 10, das heißt das Zielnetz, zu dem eine Verbindung aufgebaut werden soll, festgelegt. Ferner werden in einem ersten Schritt die Zugangsarten 2, 3, 4, 5 festgelegt, über die überhaupt eine Verbindung zu dem Heimat-Kommunikationsnetz 10 aufgebaut werden dürfen. Hier entscheidet der Benutzer bereits welche Übertragungsmedien 2, 3, 4, 5 er überhaupt für geeignet erachtet. Für jede gewünschte Zugangsart 2, 3, 4, 5 werden ferner die entsprechenden Sicherheitserfordernisse festgelegt. Des Weiteren legt der Nutzer des elektronischen Endgerätes 10 eine Reihenfolge für die Zugangsarten 2, 3, 4, 5 fest, die zur Herstellung der Verbindung zu dem Heimat-Kommunikationsnetz 10 genutzt werden soll. Hierzu erzeugt er eine sogenannte Prioritätenliste. So kann beispielsweise in der Prioritätenliste festgelegt werden, dass zunächst eine kabelgebundene Verbindung, wie beispielsweise eine LAN-Verbindung 3, anschließend eine WLAN-Verbindung 2 und zuletzt eine UMTS-Verbindung 5 genutzt werden soll. Diese Prioritätenliste kann jederzeit von dem Nutzer des elektronischen Endgerätes 1 neu erstellt oder geändert werden.

In einem weiteren Schritt stellt das elektronische Endgerät 1, insbesondere eine Softwarekomponente des elektronischen Endgerätes 1, eine Anfrage zu einem bekannten Ankerpunkt 21, der auf einem Web-Server im Internet 20 erreichbar ist. In dieser Anfrage wird angefragt, ob überhaupt eine Verbindung über das Internet zur Verfügung steht. Ist dieser Ankerpunkt 21 nicht erreichbar, so bedeutet dies für das elektronische Endgerät 1, dass keine vollständige Verbindung zum Internet 20 zur Verfügung steht und damit über das Internet auch keine Verbindung zu dem Heimat-Kommunikationsnetz 10 aufgebaut werden kann. Falls jedoch eine Verbindung über das Internet besteht, empfängt das elektronische Endgerät 1 eine Antwortnachricht von dem Ankerpunkt 21. In der Antwortnachricht ist die aktuelle IP-Adresse beziehungsweise die NAT-IP-Adresse des elektronischen Endgerätes 1 angegeben. Das heißt, empfängt das elektronische Endgerät 1 eine IP-Adresse oder eine NAT-IP-Adresse, weiß das elektronische Endgerät 1, dass eine Verbindung zu dem Heimat-Kommunikationsnetz 10 möglich ist. Ggf. ist aber auch eine VPN-Mobilfunkverbindung über einen nutzerspezifischen Zugriffspunkt (Corporate APN) möglich. Hier ist keine Internetverbindung erforderlich.

Nach dem Erhalt der Antwortnachricht von dem sogenannten ersten Ankerpunkt 21 von einem Web-Server im Internet 20, sendet das elektronische Endgerät 1, insbesondere die Softwarekomponente des elektronischen Endgerätes 1, wiederholt eine weitere Anfrage zu einem vorbestimmten zweiten Ankerpunkt 11 einer Servereinheit, wobei der zweite Ankerpunkt 11 nur im Heimat-Kommunikationsnetz 10 erreichbar ist. In dieser weiteren Anfrage wird angefragt, über welche Zugangsart eine Verbindung von dem elektronischen Endgerät 1 zu dem Heimat-Kommunikationsnetz 10 besteht beziehungsweise welche Zugangsart 2, 3, 4, 5 zusätzlich bereitgestellt werden kann. Empfängt das elektronische Endgerät 1 keine Antwortnachricht von dem zweiten Ankerpunkt 11 des Heimat-Kommunikationsnetzes 10, so besteht aktuell keine Datenverbindungen zwischen dem elektronischen Endgerät 1 und dem Heimat-Kommunikationsnetz 10. Empfängt das elektronische Endgerät 1 eine Antwortnachricht von dem zweiten Ankerpunkt 11 des Heimat-Kommunikationsnetzes 10, überprüft das elektronische Endgerät 1 anhand der Antwortnachricht, über welche Zugangsart 2, 3, 4, 5 eine Verbindung von dem elektronischen Endgerät 1 zu dem Heimat-Kommunikationsnetz 10 besteht bzw. welche Zugangsart 2, 3, 4, 5 zusätzlich bereitgestellt werden kann. Da wiederholt Antwortnachrichten von dem elektronischen Endgerät 1 empfangen werden, ist das elektronische Endgerät 1 ständig auf dem Laufenden, welche Zugangsart 2, 3, 4, 5 zusätzlich bereitgestellt werden.

Anschließend vergleicht das elektronische Endgerät 1 beziehungsweise eine Softwarekomponente auf dem elektronischen Endgerät 1, die bestehende und die zusätzlich bereitgestellten Zugangsarten 2, 3, 4, 5, falls diese vorhanden sind, hinsichtlich ihrer Übertragungsleistung, ihrer Übertragungsqualität und/oder ihrer Übertragungskosten und wählt diejenigen Zugangsart 2, 3, 4, 5 aus, deren Übertragungsleistung höher, deren Übertragungsqualität besser und/oder deren Übertragungskosten niedriger ist.

Ferner überprüft das elektronische Endgerät 1, ob die ausgewählte Zugangsart 2, 3, 4, 5 in der Prioritätenliste festgelegt wurde. Falls die ausgewählte Zugangsart 2, 3, 4, 5 in der Prioritätenliste festgelegt wurde, passt das elektronische Endgerät 1 automatisch die Sicherheitsanfordernisse an die ausgewählte Zugangsart 2, 3, 4, 5 an und stellt eine Verbindung zu dem Heimat-Kommunikationsnetz 10 über die ausgewählte Zugangsart 2, 3, 4, 5 her. Weisen zwei zusätzlich verfügbare Zugangsarten 2, 3, 4, 5 eine gleiche Performance hinsichtlich der Übertragungsleistung, der Übertragungsqualität und der Übertragungskosten auf, wird diejenige Zugangsart 2, 3, 4, 5 ausgewählt, die in der Prioritätenliste eine höhere Priorität aufweist. Diese Reihenfolge ist durch den Nutzer selbst festgelegt worden.

In einem abschließenden Schritt überprüft das elektronische Endgerät 1, ob überhaupt eine Datenübertragung zwischen dem elektronischen Endgerät 1 und dem Heimat-Kommunikationsnetz 10 über die ausgewählte Zugangsart 2, 3, 4, 5 möglich ist. Ist eine Datenübertragung möglich, wechselt das elektronische Endgerät 1 zu der ausgewählten Zugangsart 2, 3, 4, 5. Wenn keine Datenübertragung möglich ist, behält das elektronische Endgerät 1 die bestehende Zugangsart 2, 3, 4, 5 bei.

Weist das Heimat-Kommunikationsnetz 10 wenigstens eine Firewall 13 und ein VPN-Gateway 14 auf, kann die Verbindung als eine VPN-Verbindung ausgebildet sein. So kann über die Firewalls 13 und das VPN-Gateway 14 eine Remote-Verbindung zwischen dem elektronischen Endgerät 1 und dem Heimat-Kommunikationsnetz 10 aufgebaut werden.

Die Verbindung zwischen dem elektronischen Endgerät 1, dem Internet 20 und dem Heimat-Kommunikationsnetz 10 wird vorteilhafterweise über Router 7, 12, 22, 23 hergestellt. Über die Verbindungen können Anwendungen 8 und Daten des elektronischen Endgerätes 1 auf das Heimat-Kommunikationsnetz 10 zugreifen.

### Bezugszeichenliste

- 1: elektronisches Endgerät
- 2: Zugangsart WLAN
- 3: Zugangsart LAN
- 4: Zugangsart GPRS
- 5: Zugangsart UMTS
- 6: Besuchernetze
- 7: Router
- 8: Anwendungen

- 10: Heimat-Kommunikationsnetz
- 11: Ankerpunkt im Heimat-Kommunikationsnetz
- 12: Router
- 13: Firewall
- 14: VPN-Gateway

- 20: Internet
- 21: Ankerpunkt im Internet
- 22: Router
- 23: Router

## Patentansprüche

1. Verfahren zur Herstellung einer Kommunikationsverbindung von einem elektronischen Endgerät (1) zu einem vordefinierten Heimat-Kommunikationsnetz (10), mit folgenden Schritten:
Festlegen der gewünschten Zugangsarten (2, 3, 4, 5), über die eine Verbindung zu dem Heimat-Kommunikationsnetz (10) aufgebaut werden darf, der Sicherheitserfordernisse für jede gewünschte Zugangsart (2, 3, 4, 5) zur Erreichung des Heimat-Kommunikationsnetzes (10) sowie der Reihenfolge der zu verwendenden Zugangsarten (2, 3, 4, 5) zur Herstellung der Verbindung zu dem Heimat-Kommunikationsnetz (10) in einer Prioritätenliste;
Feststellen, dass über eine erste Zugangsart (2, 3, 4, 5) eine Verbindung zu dem Heimat-Kommunikationsnetz (10) besteht, indem das elektronische Endgerät (1) einen bekannten Ankerpunkt im Heimat-Kommunikationsnetz (10) anfragt;
Bei Bestehen einer Verbindung, Empfangen einer Antwortnachricht von dem Ankerpunkt durch das elektronische Endgerät (1), in welcher angegeben ist wie das elektronische Endgerät (1) mit dem Heimat-Kommunikationsnetz (10) verbunden ist;
Nach Feststellung, dass über eine erste Zugangsart (2, 3, 4, 5) eine Verbindung zu dem Heimat-Kommunikationsnetz (10) besteht, wiederholtes Überprüfen durch das elektronische Endgerät (1) durch wiederholtes Anfragen des Ankerpunktes im Heimat-Kommunikationsnetz (10), ob über wenigstens eine weitere Zugangsart (2, 3, 4, 5) eine zusätzliche Verbindung möglich ist;
Bei Empfang einer Antwortnachricht von dem Ankerpunkt, Überprüfen im elektronischen Endgerät (1), ob die wenigstens eine weitere Zugangsart (2, 3, 4, 5) in der Prioritätenliste festgelegt wurde;
Auswählen derjenigen Zugangsart (2, 3, 4, 5) mit der höchsten Priorität in der Prioritätenliste, wobei das elektronische Endgerät (1) die erste Zugangsart und die wenigstens eine weitere Zugangsart hinsichtlich ihrer Qualitätsmerkmale der Verbindung vergleicht;
Automatisches Anpassen der Sicherheitserfordernisse an die ausgewählte Zugangsart (2, 3, 4, 5); und
Herstellen einer Verbindung zu dem Heimat-Kommunikationsnetz (10) über die ausgewählte Zugangsart (2, 3, 4, 5), wobei bei Feststellung, dass eine Datenübertragung zwischen dem elektronischen Endgerät (1) und dem Heimat-Kommunikationsnetz (10) über die ausgewählte Zugangsart (2, 3, 4, 5) möglich ist, ein Wechsel des elektronischen Endgeräts (1) zu der ausgewählten Zugangsart (2, 3, 4, 5) erfolgt.

2. Verfahren nach Anspruch 1, **dadurch gekennzeichnet, dass** bei Feststellung, dass eine netzinterne Verbindung zu dem Heimat-Kommunikationsnetz besteht, kein Wechsel zu einer anderen Zugangsart erfolgt, oder dass bei Feststellung, dass keine netzinterne Verbindung zu dem Heimat-Kommunikationsnetz besteht, eine VPN-Verbindung über das Internet oder über ein dem Heimat-Kommunikationsnetz (10) zugeordnetes Mobilfunknetz mittels eines nutzerspezifischen Zugriffpunktes in Form eines Corporate APN zu dem Heimat-Kommunikationsnetz (10) über die ausgewählte Zugangsart (2, 3, 4, 5) hergestellt wird.

3. Verfahren nach Anspruch 2, **dadurch gekennzeichnet, dass** bei der Herstellung der VPN-Verbindung zu dem Heimat-Kommunikationsnetz (10) über die ausgewählte Zugangsart (2, 3, 4, 5) die Datenübertragung zwischen dem elektronischen Endgerät (1) und dem Heimat-Kommunikationsnetz (10) über alle Zugangsarten (2, 3, 4, 5) blockiert wird, bis der Wechsel zu der ausgewählten Zugangsart (2, 3, 4, 5) durchgeführt und die Verbindung über die erste Zugangsart (2, 3, 4, 5) beendet ist.

4. Verfahren nach Anspruch 2, **dadurch gekennzeichnet, dass** zur Herstellung einer VPN-Verbindung von dem elektronischen Endgerät (1) zu dem Heimat-Kommunikationsnetz (10) über das Internet einem Router des Heimat-Kommunikationsnetzes (10) eine demilitarisierte Zone vorgeschaltet ist.

5. Verfahren nach einem der vorherigen Ansprüche 1 bis 4, **dadurch gekennzeichnet, dass** die Reihenfolge der zu verwendenden Zugangsarten (2, 3, 4, 5) in der Prioritätenliste von der Bandbreite der Datenübertragung, des Jitters der Datenübertragung, der Latenz der Datenübertragung, der Netzauslastung, des Datendurchsatzes, der Fehlerrate der Datenübertragung, der Ausfallsicherheit der Datenübertragung, der Empfangsstärke bei der Datenübertragung, der Übertragungskosten und/oder des Signalisierungsprotokolls abhängig ist.

6. Verfahren nach einem der vorherigen Ansprüche 1 bis 5, **dadurch gekennzeichnet, dass** durch Anfragen eines Ankerpunktes im Internet festgestellt wird, dass über wenigstens eine weitere Zugangsart (2, 3, 4, 5) eine Verbindung zu dem Heimat-Kommunikationsnetz (10) über das Internet besteht, wobei durch den Ankerpunkt die aktuelle IP-Adresse bzw. die NAT-IP-Adresse des elektronischen Endgerätes (1) dem elektronischen Endgerät (1) übertragen wird.

7. Verfahren nach einem der vorherigen Ansprüche 1 bis 6, **dadurch gekennzeichnet, dass** der Zugriff auf das Heimat-Kommunikationsnetz (10) über das Internet oder über das dem Heimat-Kommunikationsnetz (10) zugeordnete Mobilfunknetz mittels eines nutzerspezifischen Zugriffpunktes in Form eines Corporate APN über einen Router des Heimat-Kommunikationsnetz (10) durchgeführt wird.

8. Verfahren nach Anspruch 7, **dadurch gekennzeichnet, dass** der Router des Heimat-Kommunikationsnetzes (10) über eine LAN-Verbindung den Ankerpunkt des Heimat-Kommunikationsnetzes (10) ansteuert.

9. Verfahren nach einem der vorherigen Ansprüche 1 bis 8, **dadurch gekennzeichnet, dass** bei der automatischen Anpassung der Sicherheitserfordernisse an die ausgewählte Zugangsart (2, 3, 4, 5) die Firewall- und http-Proxy-Einstellungen automatisch geändert werden.

10. Verfahren nach einem der vorherigen Ansprüche 1 bis 9, **dadurch gekennzeichnet, dass** die gewünschten Zugangsarten (2, 3, 4, 5) zur Herstellung einer Verbindung zu dem Heimat-Kommunikationsnetz (10), die Sicherheitserfordernisse für jede gewünschte Zugangsart (2, 3, 4, 5) sowie der Reihenfolge der zu verwendenden Zugangsarten (2, 3, 4, 5) zur Herstellung der Verbindung zu dem Heimat-Kommunikationsnetz (10) anhand der Prioritätenliste konfiguriert werden.

11. Verfahren nach einem der vorherigen Ansprüche 1 bis 10, **dadurch gekennzeichnet, dass** für jedes Land bzw. Bundesland bzw. für jede Region unterschiedliche Prioritätslisten festlegt werden.

12. Verfahren nach einem der vorherigen Ansprüche 1 bis 11, **dadurch gekennzeichnet, dass** bei der automatischen Anpassung der Sicherheitsanfordernisse an die ausgewählte Zugangsart (2, 3, 4, 5) und der Herstellung der Verbindung über das Internet zu dem Heimat-Kommunikationsnetz (10) über die ausgewählte Zugangsart (2, 3, 4, 5) eine VPN-Verbindung aufgebaut wird, falls die Zugangsart (2, 3, 4, 5) nicht Teil des Heimat-Kommunikationsnetz (10) ist.

13. Verfahren nach einem der vorherigen Ansprüche 1 bis 12, **dadurch gekennzeichnet, dass** die Ankerpunkte (11, 21) als auf einem Webserver zur Verfügung gestellte Skripte ausgebildet sind und dass die Skripte im Heimat-Kommunikationsnetz (10) feststellen, ob eine, und wenn ja welche Zugangsart zwischen dem elektronischen Endgerät und dem Heimat-Kommunikationsnetz besteht.

14. Verfahren nach einem der vorherigen Ansprüche 1 bis 13, **dadurch gekennzeichnet, dass** das elektronische Endgerät (1) automatisch ein Login-Portal erkennt und die Anmelde-/ Bezahlseite des Login-Portals darstellt.

## Claims

1. A method of establishing a communication connection from an electronic terminal (1) to a predefined home communication network (19), with the following steps:
Setting the desired access modes (2, 3, 4, 5), by means of which a connection to the home communication network (10) may be established, as well as of the security requirements for each of the desired access mode (2, 3, 4, 5) for reaching the home communication network (10) as well as of the order of the access modes (2, 3, 4, 5) to be used for the establishment of the connection to the home communication network (10), in a priority list;
Determining, that a connection to the home communication network (10) does exist via a first access mode (2, 3, 4, 5), whilst the electronic terminal (1) inquires a known anchor point in the home communication network (10);
At the existence of a connection, receiving a response message from the anchor point by the electronic terminal (1), in which is indicated, how the electronic terminal (1) is connected to the home communication network (10);
After determination, that a connection to the home communication network (10) does exist via a first access mode (2,3, 4, 5), repeated checking through said electronic terminal (1) by means of repeated inquiring of said anchor point in said home communication network (10), whether an additional connection is possible via at least one further access mode (2, 3, 4, 5);
At the receipt of a response message from the anchor point, checking within the electronic terminal (1), whether the at least one further access mode (2, 3, 4, 5) was defined in the priority list;
Selecting the access mode (2, 3, 4, 5) with the highest priority in the priority list, whereby the electronic terminal (1) compares the first access mode and the at least one further access mode with regard to their quality features of the connection;
Automatically adapting the security requirements to the selected access mode (2, 3, 4, 5); and
Establishing a connection to the home communication network (10) via the selected access mode (2, 3, 4, 5), whereby upon determination that a data transfer between the electronic terminal (1) and the home communication network (10) is possible via the selected access mode (2, 3, 4, 5), a switchover of the electronic terminal (10) to the selected access mode (2, 3, 4, 5) is performed.

2. The method according to claim 1, **characterized in that** upon determination, that a network internal connection to the home communication network does exist, no change to a different access mode takes place, or that upon determination, that no network internal connection to the home communication network does exist, a VPN-connection via the Internet or via a mobile radio network being assigned to the home communication network (10) by means of a user specific access point in form of a corporate APN to the home communication network (10) is established via the selected access mode (2, 3, 4, 5).

3. The method according to claim 2, **characterized in that** at the establishment of the VPN-connection to the home communication network (10) via the selected access mode (2, 3, 4, 5) the data transfer between the electronic terminal (1) and the home communication network (10) via all of the access modes (2, 3, 4, 5) gets blocked, until the switchover to the selected access mode (2, 3, 4, 5) has been performed and the connection via the first access mode (2, 3, 4, 5) has been terminated.

4. The method according to claim 2, **characterized in that** for the establishment of a VPN-connection from the electronic terminal (1) to the home communication network (10) via the Internet a demilitarized zone is prefixed to a router of the home communication network (10).

5. The method according to anyone of claims 1 to 4, **characterized in that** the order of the access modes (2, 3, 4, 5) in the priority list to be used is dependent on the bandwidth of the data transfer, on the jitter of the data transfer, on the latency of the data transfer, on the network utilization, on the data rate, on the error rate of the data transmission, on the failure reliability of the data transmission, on the reception strength during the data transmission, on the transmission costs and/or on the signaling protocol.

6. The method according to anyone of claims 1 to 5, **characterized in that** by means of inquiring an anchor point in the Internet it is determined, that via at least one further access mode (2, 3, 4, 5) a connection to the home communication network (10) does exist via the Internet, whereby the current IP-address or the NAT-IP-address of the electronic terminal (1) gets transmitted by the anchor point to the electronic terminal (1).

7. The method according to anyone of claims 1 to 6, **characterized in that** the access to the home communication network (10) via the Internet or via the mobile radio network being assigned to the home communication network (10) is performed by means of a user specific access point in the form of a Corporate APN via a router of the home communication network (10).

8. The method according to claim 7, **characterized in that** the router of the home communication network (10) controls the anchor point of the home communication network (10) via a LAN-connection.

9. The method according to anyone of claims 1 to 8, **characterized in that** during the automatic adaption of the security requirements to the selected access mode (2, 3, 4, 5) the Firewall- and http-proxy-settings get automatically changed.

10. The method according to anyone of claims 1 to 9, **characterized in that** the desired access modes (2, 3, 4, 5) for the establishment of a connection to the home communication network (10), the security requirements for each of the desired access modes (2, 3, 4, 5) as well as the order of the access modes (2, 3, 4, 5) to be used for the establishment of the connection to the home communication network (10) get configured on the basis of the priority list.

11. The method according to anyone of claims 1 to 10, **characterized in that** for each country or state or region different priority lists get determined.

12. The method according to anyone of claims 1 to 11, **characterized in that** during the automatic adaption of the security requirements to the selected access mode (2, 3, 4, 5) and the establishment of the connection via the Internet to the home communication network (10) via the selected access mode (2, 3, 4, 5) a VPN connection gets established, in case that the access mode (2, 3, 4, 5) is not part of the home communication network (10).

13. The method according to anyone of claims 1 to 12, **characterized in that** the anchor points (11,21) are formed as scrips being provided on a web server and that said scripts determine in the home communication network (10), whether one, and if which access mode between the electronic terminal and the home communication network does exist.

14. The method according to anyone of claims 1 to 13, **characterized in that** the electronic terminal (1) automatically recognizes a login portal and represents the login/payment side of the login portal

## Revendications

1. Procédé d'établissement d'une liaison de communication d'un terminal électronique (1) à un réseau de communication natif (10) prédéfini, avec les étapes suivantes :
la spécification des types d'accès (2, 3, 4, 5) souhaités, par le biais desquels une liaison au réseau de communication natif (10) peut être constituée, des exigences de sécurité pour chaque type d'accès (2, 3, 4, 5) souhaité pour atteindre le réseau de communication natif (10) ainsi que de la séquence des types d'accès (2, 3, 4, 5) à employer pour l'établissement de la liaison au réseau de communication natif (10) dans une liste de priorités ;
la détermination que, par le biais d'un premier type d'accès (2, 3, 4, 5), une liaison au réseau de communication natif (10) est présente par le fait que le terminal électronique (1) interroge un point d'ancrage connu dans le réseau de communication natif (10) ;
en cas de présence d'une liaison, la réception, par le terminal électronique (1), d'un message de réponse du point d'ancrage, dans lequel il est indiqué comment le terminal électronique (1) est relié au réseau de communication natif (10) ;
après la détermination que, par le biais d'un premier type d'accès (2, 3, 4, 5), une liaison au réseau de communication natif (10) est présente, la vérification répétée par le terminal électronique (1) par une interrogation répétée du point d'ancrage dans le réseau de communication natif (10) si une liaison supplémentaire est possible par le biais d'au moins un autre type d'accès (2, 3, 4, 5) ;
lors de la réception d'un message de réponse du point d'ancrage, la vérification dans le terminal électronique (1) si l'au moins un autre type d'accès (2, 3, 4, 5) a été spécifié dans la liste de priorités ;
la sélection du type d' accès (2, 3, 4, 5) avec la priorité la plus haute dans la liste de priorités, dans lequel le terminal électronique (1) compare le premier type d' accès et l'au moins un autre type d'accès quant à leurs caractéristiques de qualité de liaison ;
l'adaptation automatique des exigences de sécurité au type d'accès (2, 3, 4, 5) sélectionné ; et
l'établissement d'une liaison au réseau de communication natif (10) par le biais du type d'accès (2, 3, 4, 5) sélectionné, dans lequel, lors de la détermination qu'une transmission de données entre le terminal électronique (1) et le réseau de communication natif (10) est possible par le biais du type d'accès (2, 3, 4, 5) sélectionné, est effectué un changement du terminal électronique (1) au type d'accès (2, 3, 4, 5) sélectionné.

2. Procédé selon la revendication 1, **caractérisé en ce que**, lors de la détermination qu'une liaison, interne au réseau, est présente avec le réseau de communication natif, aucun changement à un autre type d'accès n'est effectué, ou **en ce que**, lors de la détermination qu'aucune liaison, interne au réseau, n'est pas présente avec le réseau de communication natif, une liaison de réseau VPN par le biais de l'Internet ou par le biais d'un réseau de radiocommunication mobile associé au réseau de communication natif (10) au moyen d'un point d'accès spécifique à l'utilisateur sous forme d'un réseau APN Corporate est établie avec le réseau de communication natif (10) par le biais du type d'accès (2, 3, 4, 5) sélectionné.

3. Procédé selon la revendication 2, **caractérisé en ce que**, lors de l'établissement de la liaison de réseau VPN avec le réseau de communication natif (10) par le biais du type d' accès (2, 3, 4, 5) sélectionné, la transmission de données entre le terminal électronique (1) et le réseau de communication natif (10) par le biais de tous les types d'accès (2, 3, 4, 5) est bloquée jusqu'à ce que le changement au type d'accès (2, 3, 4, 5) sélectionné soit exécuté et que la liaison par le biais du premier type d'accès (2, 3, 4, 5) soit terminée.

4. Procédé selon la revendication 2, **caractérisé en ce que**, pour l'établissement d'une liaison de réseau VPN du terminal électronique (1) au réseau de communication natif (10) par le biais de l'Internet, une zone démilitarisée est présente en amont d'un routeur du réseau de communication natif (10).

5. Procédé selon l'une quelconque des revendications précédentes 1 à 4, **caractérisé en ce que** la séquence des types d'accès (2, 3, 4, 5) à employer dans la liste de priorités dépend de la largeur de bande de la transmission de données, de la gigue de la transmission de données, de la latence de la transmission de données, de la charge du réseau, du débit de données, du taux d'erreur de la transmission de données, de la sûreté contre les pannes de la transmission de données, de l'intensité de réception lors de la transmission de données, des coûts de transmission et/ou du protocole de signalisation.

6. Procédé selon l'une quelconque des revendications précédentes 1 à 5, **caractérisé en ce que**, par l'interrogation d'un point d'ancrage dans 1"Internet, il est déterminé que, par le biais d'au moins un autre type d'accès (2, 3, 4, 5), une liaison au réseau de communication natif (10) est présente par le biais de l'Internet, dans lequel, par le point d'ancrage, l'adresse IP actuelle ou l'adresse IP NAT du terminal électronique (1) est transmise au terminal électronique (1).

7. Procédé selon l'une quelconque des revendications précédentes 1 à 6, **caractérisé en ce que** l'accès au réseau de communication natif (10) par le biais de l'Internet ou par le biais du réseau de radiocommunication mobile associé au réseau de communication natif (10) est exécuté au moyen d'un point d'accès spécifique à l'utilisateur sous forme d'un réseau Corporate APN par le biais d'un routeur du réseau de communication natif (10).

8. Procédé selon la revendication 7, **caractérisé en ce que** le routeur du réseau de communication natif (10) commande le point d'ancrage du réseau de communication natif (10) par le biais d'une liaison LAN.

9. Procédé selon l'une quelconque des revendications 1 à 8, **caractérisé en ce que**, lors de l'adaptation automatique des exigences de sécurité au type d'accès (2, 3, 4, 5) sélectionné, les réglages de pare-feu et de mandataire http sont automatiquement modifiés.

10. Procédé selon l'une quelconque des revendications 1 à 9, **caractérisé en ce que** les types d'accès (2, 3, 4, 5) souhaités pour l'établissement d'une liaison au réseau de communication natif (10), les exigences de sécurité pour chaque type d'accès (2, 3, 4, 5) souhaité ainsi que la séquence des types d'accès (2, 3, 4, 5) à employer pour l'établissement de la liaison au réseau de communication natif (10) sont configurés à l'aide de la liste de priorités.

11. Procédé selon l'une quelconque des revendications précédentes 1 à 10, **caractérisé en ce que** pour chaque État ou pour chaque État fédéré ou pour chaque région sont spécifiées différentes listes de priorités.

12. Procédé selon l'une quelconque des revendications précédentes 1 à 11, **caractérisé en ce que**, lors de l'adaptation automatique des exigences de sécurité au type d'accès (2, 3, 4, 5) sélectionné et de l'établissement de la liaison par le biais de l'Internet au réseau de communication natif (10) par le biais du type d'accès (2, 3, 4, 5) sélectionné, une liaison VPN est constituée si le type d'accès (2, 3, 4, 5) ne fait pas partie du réseau de communication natif (10).

13. Procédé selon l'une quelconque des revendications 1 à 12, **caractérisé en ce que** les points d'ancrage (11, 21) sont conçus en tant que scripts mis à disposition sur un serveur Web et **en ce que** les scripts déterminent dans le réseau de communication natif (10) si un type d'accès est présent ou non entre le terminal électronique et le réseau de communication natif et, si oui, déterminent le type d'accès.

14. Procédé selon l'une quelconque des revendications précédentes 1 à 13, **caractérisé en ce que** le terminal électronique (1) reconnaît automatiquement un portail de connexion et représente la page d'accueil/de paiement du portail de connexion.
